# FASCICULE DE BREVET EUROPEEN

(11) **EP 4 589 144 B1**
(45) Date de publication et mention de la délivrance du brevet: **11.11.2026**
(21) Numéro de dépôt: 24219676.4
(22) Date de dépôt: 13.12.2024
(51) Int. Cl.: F04B 15/08, F17C 5/02, F17C 5/06, F17C 9/02, F04B 3/00, F04B 23/02

(54) **APPAREIL ET PROCÉDÉ DE COMPRESSION DE FLUIDE**
VORRICHTUNG UND VERFAHREN ZUR FLUIDVERDICHTUNG
APPARATUS AND METHOD FOR COMPRESSING FLUID

(30) Priorité: 22.01.2024 FR 2400588
(43) Date de publication de la demande: 23.07.2025
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: ABDO, Youssef, 78350 JOUY-EN-JOSAS (FR); COLEIRO, Gaetan, 38360 SASSENAGE (FR)
(74) Mandataire: Air Liquide

(56) Documents cités:
- EP-A1- 2 687 793
- FR-A1- 3 107 572
- FR-A1- 3 107 573
- FR-A1- 3 115 569
- GB-A- 2 080 117
- JP-A- 2012 163 105

## Description

L'invention concerne un appareil et un procédé de compression de fluide.

L'invention concerne plus particulièrement un appareil de compression de fluide à plusieurs étages de compression comprenant une enceinte étanche et destinée à contenir un bain de fluide cryogénique comportant une phase liquide, la partie supérieure de l'enceinte étant destinée à contenir un ciel gazeux, une première chambre de compression, une seconde chambre de compression, un système d'admission communiquant avec la première chambre de compression configuré pour permettre l'entrée de fluide dans ladite première chambre de compression, un système de transfert communiquant avec la première et la seconde chambre de compression et configuré pour permettre le transfert de fluide pré-comprimé dans la première chambre de compression vers la seconde chambre de compression, l'appareil comprenant en outre un orifice d'évacuation communiquant avec la seconde chambre de compression et configuré pour permettre la sortie de fluide comprimé dans la seconde chambre de compression, dans lequel le système d'admission comprend un ou plusieurs clapets configuré(s) pour assurer l'entrée de fluide à comprimer dans la première chambre de compression lors d'une phase d'admission et empêcher la sortie de fluide en phase de compression, l'appareil comprenant en outre un orifice d'évacuation permettant une communication entre la première chambre de compression et de bain pour laisser sortir un surplus de liquide emprisonné dans la première chambre de compression lors d'une compression de fluide dans la première chambre de compression.

Pour augmenter les performances et le rendement volumétrique des pompes d'hydrogène liquide, il est indispensable d'avoir une bonne qualité thermodynamique du liquide à l'admission. Ceci pour éviter la cavitation par perte de charge et par entrée thermique. La compression à haute pression du liquide aspiré d'un réservoir contenant la pompe (bain ou « sump» en anglais) est souvent précédée d'un premier étage de compression (ou pré-compression). Cette pré-compression est généralement un étage de compression à plus faible taux que le second étage de compression. Ce premier étage de compression aspire du liquide quasi-saturé à la température de saturation du bain et le sous-refroidit mécaniquement par pressurisation afin de réaliser un bon remplissage sans vaporisation « flash » au niveau de l'étage de compression.

Dans le cas notamment où les deux étages de compression sont réalisés par des mouvements opposés d'un même piston, la phase de remplissage du deuxième étage de compression se déroule donc en même temps que la compression dans le premier étage.

Les diamètres des chambres étant différents mais la course de piston identique, les volumes balayés peuvent donc être différents (typiquement le volume du premier étage est plus important que celui du deuxième étage). En supposant que la densité du fluide reste relativement constante (car peu de compressibilité en absence de vaporisation flash) pendant l'admission dans le deuxième étage, il peut être indispensable d'évacuer une partie du liquide pressurisé hors de la première chambre de compression.

Il est connu de prévoir des lumières ou canaux faisant communiquer la première chambre de compression et le bain pour évacuer naturellement ce surplus de fluide vers le bain.

Cette évacuation de liquide en excès du premier étage de compression peut générer du gaz de vaporisation dans le bain. Un but de la présente invention est de pallier tout ou partie des inconvénients de l'art antérieur relevés ci-dessus.

Le document FR3107573A1 décrit un appareil conforme au préambule de la revendication 1. Le document FR3115569A1 décrit un appareil de compression muni d'une entretoise empêchant la communication fluidique entre sa chambre de compression et un orifice d'évacuation lors de la compression.

A cette fin, l'appareil selon l'invention, par ailleurs conforme à la définition générique qu'en donne le préambule ci-dessus, est essentiellement caractérisé en ce que qu'il comporte un clapet d'évacuation configuré pour contrôler l'évacuation de liquide via l'orifice d'évacuation et pour empêcher l'entrée de fluide dans la première chambre de compression via l'orifice d'évacuation, l'orifice d'évacuation communiquant avec l'enceinte via au moins un ralentisseur de flux configuré pour atténuer la vitesse et/ou l'intensité du flux de liquide évacué en limitant sa perte de charge.

Par ailleurs, des modes de réalisation de l'invention peuvent comporter l'une ou plusieurs des caractéristiques suivantes :
- le ralentisseur de flux comprend au moins l'un parmi : un ensemble de trous de diffusion, une buse en matériau poreux dont la perméabilité est de préférence supérieure à cinq darcy,
- le ralentisseur de flux comprend au moins l'un parmi : une buse en matériau fritté poreux, par exemple en bronze ou Inox, de préférence de forme cylindrique ou conique,
- le ralentisseur a une longueur comprise entre 15mm et 450mm et un diamètre compris de préférence entre 10mm et 80mm,
- l'orifice d'évacuation communique avec l'enceinte via au moins un conduit d'évacuation débouchant dans l'enceinte dans le bain pour être situé dans et/ou au-dessus du niveau de liquide du bain de l'enceinte,
- le conduit d'évacuation comporte une portion s'étendant dans l'enceinte parallèlement à la direction verticale et/ou transversalement à la direction verticale,
- le conduit d'évacuation s'étend du bas vers le haut de l'enceinte,
- l'orifice d'évacuation communique avec l'enceinte via plusieurs conduits d'évacuation débouchant dans l'enceinte,
- l'appareil comprend un piston mobile pour assurer la compression du fluide dans les première et seconde chambres de compression lors de mouvements opposés alternatifs,
- le récipient contient un bain constitué de liquide cryogénique, par exemple d'hydrogène liquéfié.

L'invention concerne également un procédé de pompage de fluide cryogénique utilisant un tel appareil dans lequel le récipient contient un bain de fluide cryogénique liquéfié, le procédé comprenant, une étape d'admission de liquide dans la première chambre de compression via le système d'admission et une étape de compression de fluide dans la seconde chambre de compression, puis, une étape d'admission de fluide dans la seconde chambre de compression via le système de transfert et une étape de compression du fluide dans la première chambre de compression durant laquelle un surplus de fluide est évacué de la première chambre de compression vers le bain via l'orifice d'évacuation et le au moins un ralentisseur.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :

### Brève description des figures

L'invention sera mieux comprise à la lecture de la description qui va suivre donnée uniquement à titre d'exemple et faite en se référant aux dessins annexés dans lesquels :
[Fig. 1] est une vue en coupe verticale, schématique et partielle, illustrant un premier exemple de réalisation d'un appareil selon l'invention,
[Fig. 2] est une vue en coupe verticale, schématique et partielle, illustrant un deuxième exemple de réalisation d'un appareil selon l'invention,
[Fig. 3] est une vue en coupe verticale, schématique et partielle, illustrant un troisième exemple de réalisation d'un appareil selon l'invention,
[Fig. 4] est une vue en coupe verticale, schématique et partielle, illustrant un quatrième exemple de réalisation d'un appareil selon l'invention,
[Fig. 5] est une vue en coupe verticale, schématique et partielle, illustrant un cinquième exemple de réalisation d'un appareil selon l'invention,
[Fig. 6] est une vue en coupe verticale, schématique et partielle, illustrant un sixième exemple de réalisation d'un appareil selon l'invention,

### Description détaillée

Sur toutes les figures, les mêmes références se rapportent aux mêmes éléments.

Dans cette description détaillée, les réalisations suivantes sont des exemples. Bien que la description se réfère à un ou plusieurs modes de réalisation, cela ne signifie pas que les caractéristiques s'appliquent seulement à un seul mode de réalisation. De simples caractéristiques de différents modes de réalisation peuvent également être combinées et/ou interchangées pour fournir d'autres réalisations.

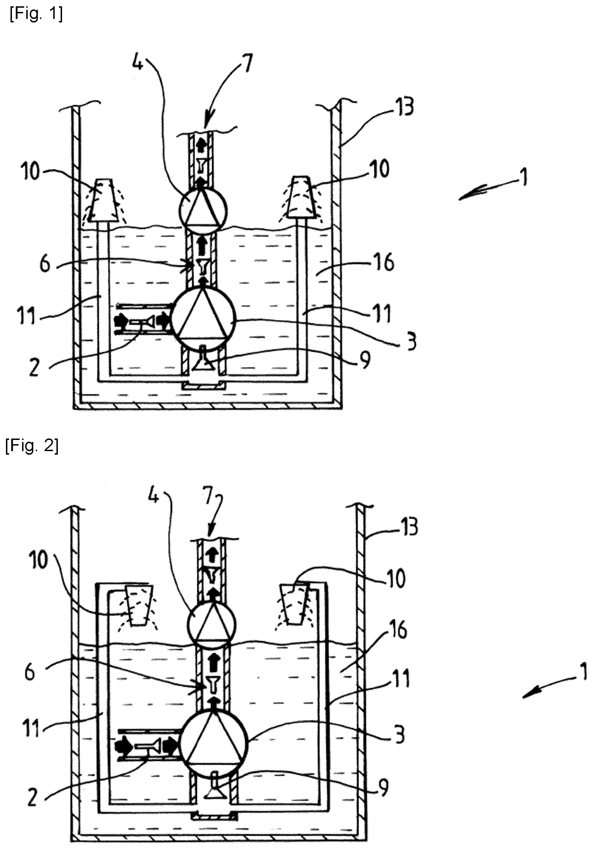

L'appareil 1 de compression de fluide représenté à la [Fig. 1] comprend deux étages de compression en série.

L'appareil 1 comprend en particulier une première chambre 3 de compression (compression à relative basse pression) et une seconde chambre 4 de compression (à relative haute pression).

L'appareil 1 comprend un système 2 d'admission communiquant avec la première chambre 3 de compression et qui est configuré pour permettre l'entrée de fluide (liquide) à comprimer dans ladite première chambre 3 de compression.

Le système 2 d'admission comprend par exemple au moins l'un parmi: un ou plusieurs clapets anti-retour, un ou plusieurs orifices ou lumière(s), au moins un clapet à disque plat ou tout autre dispositif ou vanne permettant l'entrée de fluide à comprimer dans la première chambre 3 de compression lors d'une phase d'admission et empêchant la sortie de fluide en phase de compression.

En particulier, ce système 2 d'admission (clapet(s) et/ou autre) peut être configuré pour s'ouvrir en cas de différentiel de pression déterminé entre ses deux extrémités. De plus, la première chambre 3 peut éventuellement être équipée d'une soupape ou autre élément de sécurité configuré pour limiter la pression au sein de la chambre en dessous d'un seuil de sécurité déterminé.

Comme illustré, le second étage de compression (avec la seconde chambre 4 de compression) n'est pas forcément immergé dans le bain 16 de liquide il peut être partiellement ou totalement au-dessus du bain 16). De préférence, le premier étage de compression (avec la première chambre 3 de compression) n'est pas forcément immergé dans le bain 16 de liquide au moins le système d'admission est immergé ou relié au bain de liquide.

L'appareil 1 comprend également un système 6 de transfert anti retour communiquant avec la première 3 et la seconde 4 chambre de compression et configuré pour permettre le transfert de fluide comprimé dans la première chambre 3 de compression vers la seconde 4 chambre de compression (lors et/ou en fin de phase de compression du fluide dans la première chambre 3 de compression) mais qui reste fermé lors de la phase de compression dans la seconde chambre 4 de compression. Ce système 6 de transfert peut être du même type que celui du système 2 d'admission.

L'appareil 1 peut comprendre un piston 5 mobile en translation (actionné par un organe moteur) selon un mouvement alternatif pour assurer la compression du fluide dans les première 3 et seconde 4 chambres de compression. Par exemple le mouvement de compression dans une chambre assure simultanément l'admission dans l'autre chambre (et inversement).

L'appareil 1 comprend en outre un premier orifice 7 d'évacuation communiquant avec la seconde chambre 4 de compression et configuré pour permettre la sortie de fluide comprimé à haute pression de la seconde chambre 4 de compression (pendant ou en fin de phase de compression dans cette chambre 4). Le premier orifice 7 d'évacuation peut être pourvu d'un système anti-retour qui peut être du même type que celui du système 2 d'admission (par exemple ferme tant que le différentiel de pression entre la seconde chambre 4 de compression et l'extérieur est inférieur à un seuil déterminé).

L'appareil 1 peut comprendre une conduite d'évacuation du gaz comprimé comprenant une première extrémité inférieure reliée à ce premier orifice 7 d'évacuation et une seconde extrémité supérieure située en partie supérieure de l'appareil 1 pour collecter le fluide à haute pression comprimé.

De préférence, la première chambre 3 de compression est configurée pour favoriser l'échappement du gaz par les lumières ou clapets.

Par exemple, une ou plusieurs lumière(s) et/ou orifice(s) (non représentés) peuvent être ménagées dans toute portion de paroi délimitant au moins une partie de la première chambre 3 de compression. Ces lumières peuvent être prévues pour que, en phase d'admission (agrandissement de la chambre 3), du gaz éventuellement présent dans la première chambre 3 de compression peut s'échapper par ces lumières et laisser sa place à du liquide du bain environnant. Ceci assure un remplissage totalement liquide à l'admission. De plus, en phase de compression, ces lumières peuvent laisser échapper le surplus de liquide en dosant le volume de liquide qui y sera emprisonné (ce volume peut être déterminé par la position des lumières 26).

Comme illustré, l'appareil 1 de compression peut comprendre une enceinte 13 étanche isolée thermiquement et contenant un bain 16 de fluide cryogénique de refroidissement. En particulier, la première 3 chambre de compression et éventuellement la seconde 4 chambre de compression peuvent être immergées dans une phase liquide. La partie supérieure de l'enceinte 16 peut comporter un ciel gazeux qui récupère les éventuelles fuites dans l'appareil 1.

L'appareil 1 de compression comprend en outre un orifice d'évacuation permettant une communication fluidique entre la première chambre 3 de compression et de bain 16 et configuré pour laisser sortir un surplus de liquide emprisonné dans la première chambre 3 de compression lors d'une compression dans la première chambre 3 de compression.

Un clapet 9 d'évacuation est de préférence prévu pour contrôler l'évacuation de liquide via l'orifice d'évacuation et pour empêcher l'entrée de fluide dans la chambre 3 de compression via l'orifice d'évacuation.

Comme illustré, l'orifice d'évacuation communique avec l'enceinte 13 via au moins un ralentisseur 10 de flux configuré pour atténuer la vitesse et/ou l'intensité du flux de liquide évacué en cassant le jet et en utilisant une surface d'évacuation relativement importante.

Le ralentisseur 10 est de préférence configuré pour réduire l'effet de pertes de charge généré par la diffusion ou le frottement ou des chocs violents dus à des jets vigoureux évacués. Le ralentisseur « casse » de tels jets.

Un tel ralentisseur 10 produit une évacuation non brusque du flux qui perd de sa vitesse mais qui convertit la vitesse en pression plutôt qu'en perte de charges.

Ceci limite les frottements ou les éventuelles éclaboussures de liquide vers des zones chaudes de la paroi du bain d'aspiration pouvant provoquer son évaporation.

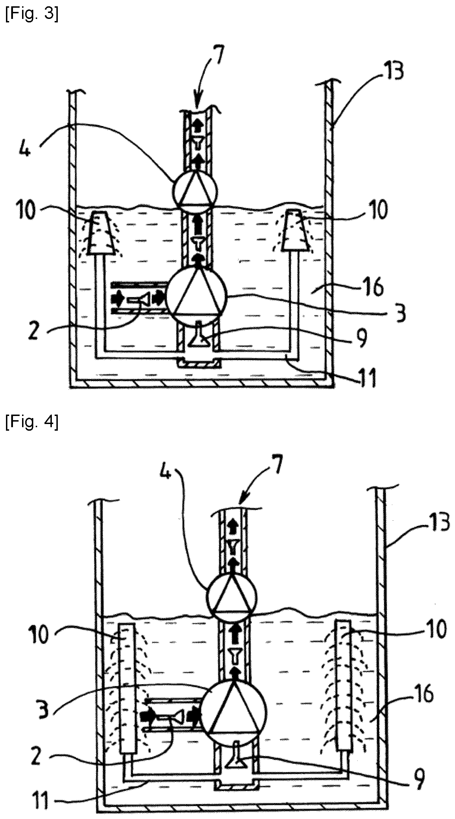

Le ralentisseur 10 de flux peut comprendre par exemple une buse de matériau poreux cf. [Fig. 1], [Fig. 2], [Fig. 3] et [Fig. 4]. Par exemple des matériaux frittés poreux peuvent comprendre : un fritté en bronze ou Inox, par exemple de forme cylindrique ou conique. La longueur peut être comprise entre 15mm et 450mm. Le diamètre peut être compris entre 10mm et 80mm. La perméabilité peut être supérieure à cinq darcy (>5D), un darcy étant égal à 10⁻¹²m².

Ceci permet de « briser » le jet évacué sans perte de charge tout en réduisant le contact du liquide proche de saturation avec des parties ou de la vapeur potentiellement plus chaude du bain 16.

Comme illustré, l'orifice d'évacuation peut communiquer avec l'enceinte 13 via au moins un conduit d'évacuation (deux dans les exemples illustrés) débouchant dans l'enceinte 13. Chaque conduit peut être pourvu d'un ralentisseur 10.

Le ou les conduits d'évacuation peuvent s'étendre :
- horizontalement et déboucher par exemple en partie inférieure du récipient 13, dans le bain liquide,
- horizontalement puis verticalement vers le haut déboucher par exemple en partie inférieure du récipient, dans le bain liquide cf. [Fig. 3],
- horizontalement puis verticalement et déboucher par exemple à la jonction entre le bain liquide et le ciel gazeux,
- horizontalement puis verticalement et déboucher par exemple au-dessus du bain liquide et le ciel gazeux cf. [Fig. 1] et [Fig. 2].

Le ralentisseur 10 est prévu de préférence prévu au niveau de l'extrémité aval du conduit d'évacuation (dans le récipient/bain).

Ainsi, comme illustré les extrémités des conduits 10 d'évacuation peuvent être orientées vers les haut ou vers le bas ou horizontalement.

En particulier, il est possible d'orienter le ou les conduits 10 d'évacuation à la verticale afin de réduire le contact entre les bulles potentielles et le liquide du bain 16. De cette manière les bulles se dirigent plutôt vers le haut du bain et donc vers le ciel gazeux tandis que le liquide se déverse dans la phase liquide.

Dans le cas d'une évacuation dans la partie gazeuse, l'écoulement de liquide évacué peut ruisseler et se déverser lentement dans la phase liquide. De cette manière l'échange thermique est limité entre la phase liquide et la phase gazeuse. Comme illustré, les deux conduits d'évacuation peuvent être reliés à un même clapet 9 d'évacuation via une chambre commune.

Dans la variante de la [Fig. 4] le ralentisseur 10 comprend ou est constitué d'un tube à surface poreuse qui s'étend verticalement dans le récipient 13.

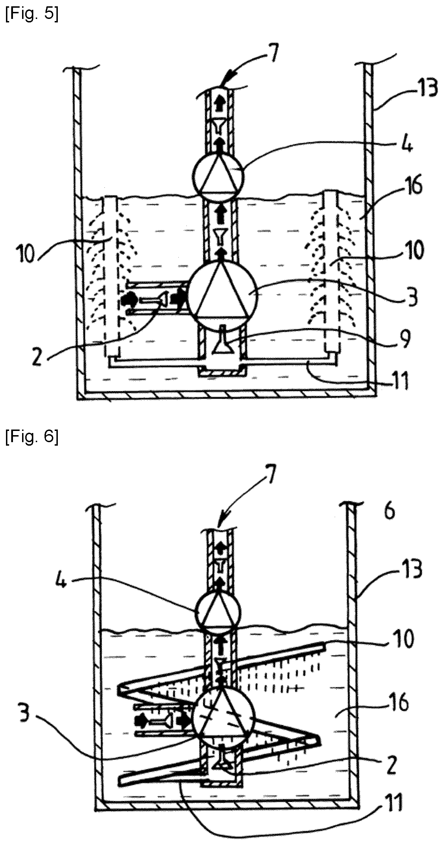

Dans la variante de la [Fig. 5], le ralentisseur 10 comprend ou est constitué d'un tube percé d'un multitude d'orifices pour permettre le ruissellement du liquide. Par exemple les orifices ont des dimensions comprises entre 0,05mm et 1mm.

Dans la variante de la [Fig. 6], le ralentisseur 10 comprend ou est constitué d'un tube percé d'un multitude d'orifices arrangé en serpentin autour d'au moins une des deux chambres de compression.

L'invention est particulièrement avantageuse pour le pompage d'hydrogène, par exemple pour produire un flux d'hydrogène à très haute pression en sortie du deuxième étage de compression (pression entre 100 et 1000bar par exemple).

## Revendications

1. Appareil (1) de compression de fluide à plusieurs étages de compression comprenant une enceinte (13) étanche et destinée à contenir un bain (16) de fluide cryogénique comportant une phase liquide, la partie supérieure de l'enceinte (13) étant destinée à contenir un ciel gazeux, une première chambre (3) de compression, une seconde chambre (4) de compression, un système (2) d'admission communiquant avec la première chambre (3) de compression configuré pour permettre l'entrée de fluide dans ladite première chambre (3) de compression, un système (6) de transfert communiquant avec la première (3) et la seconde (4) chambre de compression et configuré pour permettre le transfert de fluide pré-comprimé dans la première chambre (3) de compression vers la seconde (4) chambre de compression, l'appareil (1) comprenant en outre un premier orifice (7) d'évacuation communiquant avec la seconde chambre (4) de compression et configuré pour permettre la sortie de fluide comprimé dans la seconde chambre de compression, dans lequel le système (2) d'admission comprend un ou plusieurs clapets (2) configuré(s) pour assurer l'entrée de fluide à comprimer dans la première chambre (3) de compression lors d'une phase d'admission et empêcher la sortie de fluide en phase de compression, l'appareil (1) comprenant en outre un orifice d'évacuation permettant une communication entre la première chambre (3) de compression et le bain (16) pour laisser sortir un surplus de liquide emprisonné dans la première chambre (3) de compression lors d'une compression de fluide dans la première chambre (3) de compression, l'appareil (1) étant **caractérisé en ce qu'**il comporte un clapet (9) d'évacuation configuré pour contrôler l'évacuation de liquide via l'orifice d'évacuation et pour empêcher l'entrée de fluide dans la première chambre (3) de compression via l'orifice d'évacuation, l'orifice d'évacuation communiquant avec l'enceinte (13) via au moins un ralentisseur (10) de flux configuré pour atténuer la vitesse et/ou l'intensité du flux de liquide évacué en limitant sa perte de charge.

2. Appareil selon la revendication 1, **caractérisé en ce que** le ralentisseur (10) de flux comprend au moins l'un parmi : un ensemble de trous de diffusion, une buse en matériau poreux dont la perméabilité est de préférence supérieure à cinq darcy.

3. Appareil selon la revendication 1 ou 2, **caractérisé en ce que** le ralentisseur (10) de flux comprend au moins l'un parmi : une buse en matériau fritté poreux, par exemple en bronze ou Inox, de préférence de forme cylindrique ou conique.

4. Appareil selon l'une quelconque des revendications 1 à 3, **caractérisé en ce que** le ralentisseur (10) a une longueur comprise entre 15mm et 450mm et un diamètre compris de préférence entre 10mm et 80mm.

5. Appareil selon l'une quelconque des revendications 1 à 4, **caractérisé en ce que** l'orifice d'évacuation communique avec l'enceinte (13) via au moins un conduit d'évacuation débouchant dans l'enceinte (13) dans le bain (16) pour être situé dans et/ou au-dessus du niveau de liquide du bain de l'enceinte (13).

6. Appareil selon la revendication 5, **caractérisé en ce que** le conduit d'évacuation comporte une portion s'étendant dans l'enceinte (13) parallèlement à la direction verticale et/ou transversalement à la direction verticale.

7. Appareil selon la revendication 5 ou 6, **caractérisé en ce que** le conduit d'évacuation s'étend du bas vers le haut de l'enceinte (13).

8. Appareil selon l'une quelconque des revendications 5 à 7, **caractérisé en ce que** le second orifice (8) d'évacuation communique avec l'enceinte (13) via plusieurs conduits d'évacuation débouchant dans l'enceinte (13).

9. Appareil selon l'une quelconque des revendications 1 à 8, **caractérisé en ce qu'**il comprend un piston mobile pour assurer la compression du fluide dans les première (3) et seconde (4) chambres de compression lors de mouvements opposés alternatifs.

10. Appareil selon l'une quelconque des revendications 1 à 9, **caractérisé en ce que** le récipient contient un bain constitué de liquide cryogénique, par exemple d'hydrogène liquéfié.

11. Procédé de pompage de fluide cryogénique utilisant un appareil selon l'une quelconque des revendications 1 à 10 dans lequel le récipient (13) contient un bain de fluide cryogénique liquéfié, le procédé comprenant, une étape d'admission de liquide dans la première chambre (3) de compression via le système (2) d'admission et une étape de compression de fluide dans la seconde (4) chambre de compression, puis, une étape d'admission de fluide dans la seconde (4) chambre de compression via le système (6) de transfert et une étape de compression du fluide dans la première chambre (3) de compression durant laquelle un surplus de fluide est évacué de la première chambre (3) de compression vers le bain via l'orifice (8) d'évacuation et le au moins un ralentisseur (10).

## Patentansprüche

1. Eine mehrstufige Vorrichtung (1) zur Fluidkompression, umfassend ein abgedichtetes Gehäuse (13), das dazu bestimmt ist, ein Bad (16) aus kryogenem Fluid mit einer flüssigen Phase aufzunehmen, wobei der obere Teil des Gehäuses (13) dazu bestimmt ist, einen gasförmigen Leerraum aufzunehmen, eine erste Kompressionskammer (3), eine zweite Kompressionskammer (4), ein Einlasssystem (2), das mit der ersten Kompressionskammer (3) in Verbindung steht und konfiguriert ist, um den Eintritt von Fluid in die besagte erste Kompressionskammer (3) zu ermöglichen, ein Übertragungssystem (6), das mit der ersten (3) und der zweiten (4) Kompressionskammer in Verbindung steht und konfiguriert ist, um die Übertragung von vorkomprimiertem Fluid in der ersten Kompressionskammer (3) zur zweiten Kompressionskammer (4) zu ermöglichen, wobei die Vorrichtung (1) ferner eine erste Auslassöffnung (7) umfasst, die mit der zweiten Kompressionskammer (4) in Verbindung steht und konfiguriert ist, um den Austritt von komprimiertem Fluid aus der zweiten Kompressionskammer zu ermöglichen, wobei das Einlasssystem (2) ein oder mehrere Rückschlagventile (2) umfasst, die konfiguriert sind, um den Eintritt von zu komprimierendem Fluid in die erste Kompressionskammer (3) während einer Einlassphase sicherzustellen und den Austritt von Fluid während einer Kompressionsphase zu verhindern, wobei die Vorrichtung (1) ferner eine Auslassöffnung umfasst, die eine Verbindung zwischen der ersten Kompressionskammer (3) und dem Bad (16) ermöglicht, um einen Überschuss an Flüssigkeit, der in der ersten Kompressionskammer (3) während einer Kompression von Fluid in der ersten Kompressionskammer (3) eingeschlossen ist, abzulassen, wobei die Vorrichtung (1) **dadurch gekennzeichnet ist, dass** sie ein Auslassrückschlagventil (9) umfasst, das konfiguriert ist, um den Auslass von Flüssigkeit über die Auslassöffnung zu steuern und den Eintritt von Fluid in die erste Kompressionskammer (3) über die Auslassöffnung zu verhindern, wobei die Auslassöffnung mit dem Gehäuse (13) über mindestens einen Strömungsverzögerer (10) in Verbindung steht, der konfiguriert ist, um die Geschwindigkeit und/oder die Intensität des ausgelassenen Flüssigkeitsstroms durch Begrenzung seines Druckverlustes zu dämpfen.

2. Die Vorrichtung nach Anspruch 1, **dadurch gekennzeichnet, dass** der Strömungsverzögerer (10) mindestens eines aus der Gruppe umfasst: eine Anordnung von Diffusionslöchern, eine Düse aus porösem Material, deren Permeabilität vorzugsweise größer als fünf Darcy ist.

3. Die Vorrichtung nach Anspruch 1 oder 2, **dadurch gekennzeichnet, dass** der Strömungsverzögerer (10) mindestens eines aus der Gruppe umfasst: eine Düse aus porösem Sintermaterial, beispielsweise aus Bronze oder Edelstahl, vorzugsweise von zylindrischer oder konischer Form.

4. Die Vorrichtung nach einem der Ansprüche 1 bis 3, **dadurch gekennzeichnet, dass** der Verzögerer (10) eine Länge zwischen 15 mm und 450 mm und einen Durchmesser vorzugsweise zwischen 10 mm und 80 mm aufweist.

5. Die Vorrichtung nach einem der Ansprüche 1 bis 4, **dadurch gekennzeichnet, dass** die Auslassöffnung mit dem Gehäuse (13) über mindestens eine Auslassleitung in Verbindung steht, die in das Gehäuse (13) im Bad (16) mündet, um sich im und/oder über dem Flüssigkeitsspiegel des Bades des Gehäuses (13) zu befinden.

6. Die Vorrichtung nach Anspruch 5, **dadurch gekennzeichnet, dass** die Auslassleitung einen Abschnitt aufweist, der sich innerhalb des Gehäuses (13) parallel zur vertikalen Richtung und/oder quer zur vertikalen Richtung erstreckt.

7. Die Vorrichtung nach Anspruch 5 oder 6, **dadurch gekennzeichnet, dass** sich die Auslassleitung von unten nach oben im Gehäuse (13) erstreckt.

8. Die Vorrichtung nach einem der Ansprüche 5 bis 7, **dadurch gekennzeichnet, dass** die zweite Auslassöffnung (8) mit dem Gehäuse (13) über mehrere Auslassleitungen in Verbindung steht, die in das Gehäuse (13) münden.

9. Die Vorrichtung nach einem der Ansprüche 1 bis 8, **dadurch gekennzeichnet, dass** sie einen beweglichen Kolben umfasst, um die Kompression des Fluids in der ersten (3) und der zweiten (4) Kompressionskammer während entgegengesetzter alternierender Bewegungen sicherzustellen.

10. Die Vorrichtung nach einem der Ansprüche 1 bis 9, **dadurch gekennzeichnet, dass** der Behälter ein Bad aus kryogener Flüssigkeit, beispielsweise verflüssigtem Wasserstoff, enthält.

11. Ein Verfahren zum Pumpen von kryogenem Fluid unter Verwendung einer Vorrichtung nach einem der Ansprüche 1 bis 10, bei dem der Behälter (13) ein Bad aus verflüssigtem kryogenem Fluid enthält, wobei das Verfahren einen Schritt des Einlassens von Flüssigkeit in die erste Kompressionskammer (3) über das Einlasssystem (2) und einen Schritt des Komprimierens von Fluid in der zweiten (4) Kompressionskammer umfasst, dann einen Schritt des Einlassens von Fluid in die zweite (4) Kompressionskammer über das Übertragungssystem (6) und einen Schritt des Komprimierens von Fluid in der ersten Kompressionskammer (3), während dessen ein Überschuss an Fluid aus der ersten Kompressionskammer (3) zum Bad über die Auslassöffnung (8) und den mindestens einen Verzögerer (10) abgelassen wird.

## Claims

1. A multi-stage fluid compression apparatus (1) comprising a sealed enclosure (13) intended to contain a bath (16) of cryogenic fluid having a liquid phase, the upper part of the enclosure (13) being intended to contain a gaseous ullage, a first compression chamber (3), a second compression chamber (4), an intake system (2) communicating with the first compression chamber (3) configured to allow the entry of fluid into said first compression chamber (3), a transfer system (6) communicating with the first (3) and second (4) compression chambers and configured to allow the transfer of pre-compressed fluid in the first compression chamber (3) to the second compression chamber (4), the apparatus (1) further comprising a first discharge port (7) communicating with the second compression chamber (4) and configured to allow the exit of compressed fluid from the second compression chamber, wherein the intake system (2) comprises one or more check valves (2) configured to ensure the entry of fluid to be compressed into the first compression chamber (3) during an intake phase and to prevent the exit of fluid during a compression phase, the apparatus (1) further comprising a discharge port allowing communication between the first compression chamber (3) and the bath (16) to let out a surplus of liquid trapped in the first compression chamber (3) during a compression of fluid in the first compression chamber (3), the apparatus (1) being **characterized in that** it comprises a discharge check valve (9) configured to control the discharge of liquid via the discharge port and to prevent the entry of fluid into the first compression chamber (3) via the discharge port, the discharge port communicating with the enclosure (13) via at least one flow retarder (10) configured to attenuate the speed and/or intensity of the discharged liquid flow by limiting its pressure drop.

2. The apparatus according to claim 1, **characterized in that** the flow retarder (10) comprises at least one from among: a set of diffusion holes, a nozzle made of porous material whose permeability is preferably greater than five darcy.

3. The apparatus according to claim 1 or 2, **characterized in that** the flow retarder (10) comprises at least one from among: a nozzle made of porous sintered material, for example bronze or stainless steel, preferably of cylindrical or conical shape.

4. The apparatus according to any one of claims 1 to 3, **characterized in that** the retarder (10) has a length comprised between 15mm and 450mm and a diameter preferably comprised between 10mm and 80mm.

5. The apparatus according to any one of claims 1 to 4, **characterized in that** the discharge port communicates with the enclosure (13) via at least one discharge conduit opening into the enclosure (13) in the bath (16) so as to be located in and/or above the liquid level of the bath of the enclosure (13).

6. The apparatus according to claim 5, **characterized in that** the discharge conduit comprises a portion extending within the enclosure (13) parallel to the vertical direction and/or transverse to the vertical direction.

7. The apparatus according to claim 5 or 6, **characterized in that** the discharge conduit extends from the bottom towards the top of the enclosure (13).

8. The apparatus according to any one of claims 5 to 7, **characterized in that** the second discharge port (8) communicates with the enclosure (13) via several discharge conduits opening into the enclosure (13).

9. The apparatus according to any one of claims 1 to 8, **characterized in that** it comprises a mobile piston to ensure the compression of the fluid in the first (3) and second (4) compression chambers during opposite alternative movements.

10. The apparatus according to any one of claims 1 to 9, **characterized in that** the container holds a bath made of cryogenic liquid, for example liquefied hydrogen.

11. A method for pumping cryogenic fluid using an apparatus according to any one of claims 1 to 10 in which the container (13) contains a bath of liquefied cryogenic fluid, the method comprising a step of admitting liquid into the first compression chamber (3) via the intake system (2) and a step of compressing fluid in the second (4) compression chamber, then, a step of admitting fluid into the second (4) compression chamber via the transfer system (6) and a step of compressing fluid in the first compression chamber (3) during which a surplus of fluid is discharged from the first compression chamber (3) towards the bath via the discharge port (8) and the at least one retarder (10).
